Europäisches Patentamt

European Patent Office

Office européen des brevets

(11) Publication number: 0 190 596
A1

# EUROPEAN PATENT APPLICATION

(21) Application number: 86100666.6

(22) Date of filing: 20.01.86

(51) Int. Cl.⁴: F 16 B 13/06

(30) Priority: 31.01.85 IT 4150785

(43) Date of publication of application:
13.08.86 Bulletin 86/33

(84) Designated Contracting States:
AT BE CH DE FR GB LI LU NL SE

(71) Applicant: Morassutti, Paolo Giovanni
Via S. Martino e Solferino 103
I-35100 Padova(IT)

(72) Inventor: Morassutti, Paolo Giovanni
Via S. Martino e Solferino 103
I-35100 Padova(IT)

(74) Representative: Modiano, Guido et al,
MODIANO, JOSIF, PISANTY & STAUB Modiano &
Associati Via Meravigli, 16
I-20123 Milan(IT)

(54) Expandable screw securing device.

(57) The expandable screw securing device comprises a shield (1) divided in several, preferably three, parts (2-4) formed by shearing and pressing from sheet metal. At one end, called the rear end, the shield (1) hooks on and holds with rotation-preventing means a metal screw securing body cooperating with a screw (18). At an intermediate area, at the end of the shield called front end, a depressed seat, created by pressing, accommodates a spring (17), having preferably several turns, which has the function of holding the shield (1) assembled and reacting elastically to the expansion generated by the cone (9) as the screw (18) is pulled. Also provided is a particular configuration of the mutually in contact edges of the parts making up the shield (1) such that they mate over the thickness or form a reduced angle to each other. Expediently, a bushing inserted forwardly into the assembled shield cooperates with the spring to the assembly of the shield and constitutes a screw (18) centering element.

Fig. 1

EP 0 190 596 A1

"EXPANDABLE SCREW SECURING DEVICE"

This invention relates to a screw securing device, and more particularly to a screw securing device having a metal shield formation which is caused to expand by the translation of a cone produced by threading in a screw.

Known are securing devices with metal shields, the component parts whereof are formed by casting.

Thus, the possibility is afforded for obtaining shapes of any types, but production costs are particularly high, and the output low.

Also known are securing devices having shields formed by shearing from sheet metal which is then folded over to produce a cylindrical body.

In the expansion due to the cone, the shield is opened up and deformed permanently without any chance of recovering elastically its shape on loosening the expanding cone.

Also known are securing devices with a shield fabricated in several segments held together by a spring such as front hood spring or by elastic elements which tie the shield at several points.

Such securing devices have particularly high manufacturing costs particularly in the former instance for the fabrication of the elastic element, while in the latter instance the elastic tying elements provide the structure with no satisfactory elasticity.

It is a primary object of this invention to provide a robust and reliable securing device having a shield formation of steel (or other materials).

A consequent primary object is that of providing a shielding formation assembled simply by an elastic element which also produces a reaction to the expansion caused by the cone.

A further object is to provide a securing device made up of few parts to be obtained by simple machining, with a minimum of wasted material, and without hot processing.

Still another object is to provide a shielding formation which secures the expander cone, preventing both its separation and rotation as the screw is being threaded in.

A not unimportant object is to provide a securing device wherein the shielding component parts fit properly side-by-side with contact surfaces which favor a stable assembly position.

The proposed objects are achieved by a securing device characterized in that it comprises a shield formation including at least two equal segments formed, for example, by shearing and pressing from sheet metal, said shield formation defining a tubular body to the rear end whereof an expander cone is hooked which cooperates with a screw extending through said tubular body, said shield formation also having a depressed annular seat in the proximity of the front portion of the shield formation, said seat accommodating a spring having preferably several turns and being adapted to hold the segments together in the shield formation and to react elastically to the expansion thereof as caused by the insertion of an expander cone.

Expediently, also provided are a means of engagement between the expander cone and shield formation, and a front bushing inserted into the tubular body and cooperating with said spring to hold the various parts together.

The segments which make up the shield formation are shaped such as to produce a mating of the side-by-side fitting edges thereof, mating which is adapted to improve the holding in the assembled form.

Further features and advantages may be inferred from the detailed description of a preferred embodiment given herein by way of illustration and not of limitation with reference to the accompanying drawing sheets, where:

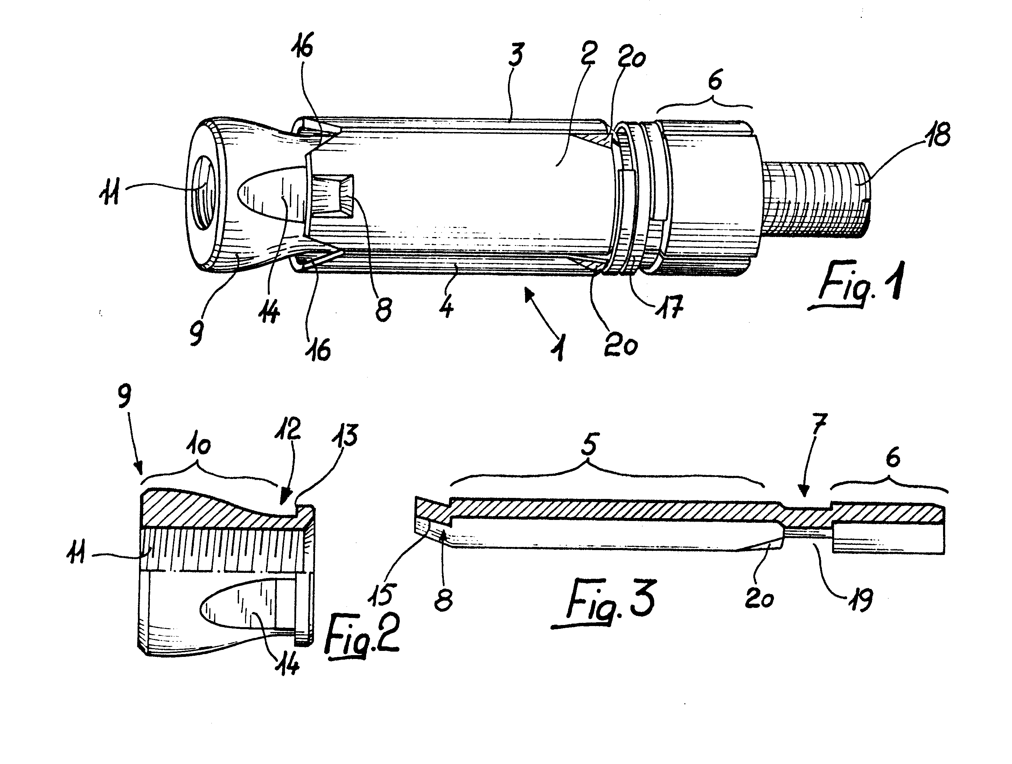

Figure 1 is a general side view of the securing device according to the invention;

Figure 2 is a partly sectional view of the expander cone;

Figure 3 shows a shield segment as sectioned along its longitudinal centerline;

Figure 4 is a view of the assembling spring;

Figure 5 shows one of the segments which make up the shield;

Figure 6 is a front view of the combination of three segments making up the shield; and

Figure 7 is a partly sectional view of the screw securing device bringing out an assembling bushing.

With reference to the drawing figures, the securing device of this invention comprises, in the embodiment shown, a shield formation, generally indicated at 1 and comprising three equal metal segments, indicated respectively at 2,3, and 4.

The three segments have approximately the shape of portions of a cylindrical surface and are formed, for example, by shearing and pressing from sheet metal of a suitable thickness.

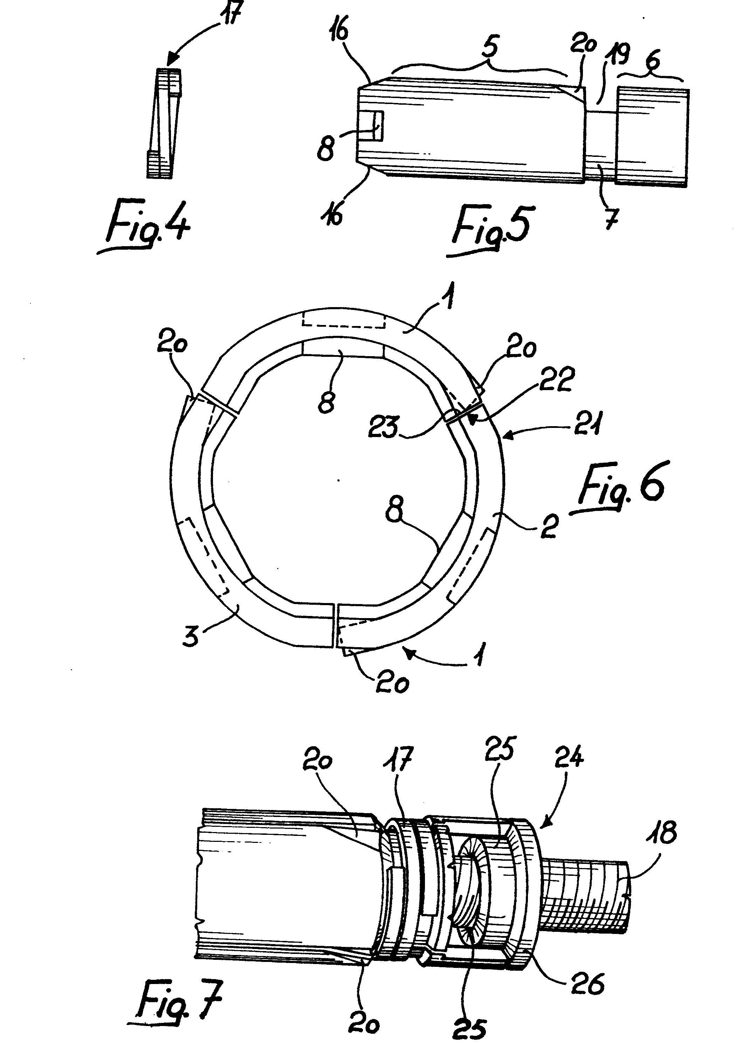

Each of them has, as shown best in Figures 3 and 5, a broad area 5 with a convex surface which may be possibly machined to cling to the walls of the hole into which the screw securing device is to be inserted, separated from a smaller front area 6 by a depressed area 7 formed by cold pressing in the steel sheet which comprises each segment.

At the rear or innermost end of the metal segment, referring to the inserted condition of the securing device into a hole, an inner hook 8 is provided formed during the same pressing operation which also provides the depressed area 7, adapted to hook on an expander cone 9 including a frusto-conical area 10 provided with an axial threaded hole 11, said frusto-conical area 10 extending into an annular channel 12 which forms a hook-on abutment 13 where said hook 8 is inserted.

Also provided on the expander cone 9 are flattened areas 14 equal in number to the identical metal segments which make up the shield.

Said faced areas 14 facilitate the slipping movement of the inclined faces 15 continuing the hook 8 and are also formed during a pressing operation.

Said indentical metal segments 2,3 and 4 have, at the end interfering with the cone 9, bevels 16 adapted

- 5 -

0190596

to facilitate the slipping of the cone 9 into the shield 1 without excessive friction or tripping.

A multiple turn spring 17 is positioned in the depressed area 7 and has the function of holding together the three identical metal segments 2,3 and 4 and of reacting elastically during the expansion of the same as a result of the insertion of the cone 9 effected by threading a screw 18 in.

The depressed area 7 has, at one of its edges, a sheared part 19 which allows folding over of an edge of the shield so as to obtain a turned out wing 20 having the function of preventing the rotation of the securing device by interference with the walls of the hole whereinto the securing device will be inserted.

The metal segments 2,3 and 4 which make up the shield are formed, as mentioned, e.g. by shearing off a sheet of metal which is then folded over. If this operation was effected to obtain perfect cylindrical portion, the side-by-side fitting edges of the various segments would present themselves in their thickness with an angle to each other and not mating.

For this reason, each segment, as viewed in section, as shown in Figure 6, has a pattern which reproduces substantially a cylindrical surface, while in the proximities of the edges or in alignment with the points indicated at 21 in Figure 6, the curvature is enhanced with subsequent flat run of the segment, thereby the edge indicated at 22 in Figure 6 is caused to mate with the edge 23 of the adjoining segment.

That configuration is particularly convenient because it provides great stability of the configuration to be obtained after positioning the spring 17 which forms the assembling element for the shield.

To provide additional stability for the structure, as shown in Figure 7, it may be expedient to insert through the front opening of the device a bushing 24 comprising a cylindrical body 25 which is inserted into the shield and is completed by a front flange formation 26 which is left outside the shield.

Said bushing 24 has an axial bore 25 which allows the screw 18 through, it also forming a centering element therefor.

The screw securing device illustrated in its simplest form comprises a three-part metal shield formation, a metal expander cone, a single elastic element forming at one time an assembling element and an element of elastic bias opposing the expansion due to the cone, and a screw for pulling the cone and effecting the securement.

The various component elements are, therefore, in reduced number and readily obtainable with simple machining operations.

From the standpoint of operation, it should be noted that the spring 17, as suitably formed for example from a coiled strip, forms practically an elastic sleeve which permits the various segments making up the shield formation to be held together.

The expander cone, owing to the presence of the annular channel 12 in which the hooks 8 of each segment are inserted, is hooked onto the shield formation such that it cannot come apart or be lost even in the absence of the screw 17.

The flattened areas 14 which are inclined because formed on the frusto-conical surface 10, allow for a soft expansion of the segments and constitute the rotation-preventing means which prevents the cone from turning relatively to the shield formation.

In fact, the hook 8 which is flat, in mating through its inclined face 15 with the flattened area 14, generates a sufficient rotation-preventing torque to prevent the screw 18 from dragging the cone therealong rotatively.

The particular configuration of the cross-section of the metal segments which make up the shield formation, which allows mating of the side-by-side edges, provides considerable stability for the shield which may be further improved by the insertion of the bushing 24.

With the bushing 24 present, the metal segments 2,3 and 4 which make up the shield formation 1 could have the shape of exactly cylindrical portions, thus obtaining spread-apart lines of side-by-side fitting of the various segments (as shown in dotted lines in Figure 6).

Assembling would acritical, however, owing to the presence of the expander cone 9 and the bushing 24 which provide centering of the metal segments held together by the spring 17.

The spring 17, which in the instance shown is viewed as formed from a strip, could be made in several parts, while it would also be possible to use a wire instead of the strip.

The removed portions 19 can prevent the rotation of the spring 17 relatively to the shield formation. In the worst case, in fact, if the spring 17 began to rotate, after a small angular rotation one of the ends of the spring would locate at a position corresponding to the removed area and enter it and abut against the edge of the following segment, thus eliminating any further possibility for rotation.

Expediently, the outer faces of each segment will be machined with known techniques and designs to obtain secure anchoring in the hole whereinto the screw securing device is to be inserted.

To prevent the screw securing device from turning bodily in the hole, there are provided rotation-preventing wings obtained, in the instance shown, by folding over one of the edges of each segment (wings 20), but also obtainable in other ways such as the creation of raised wings proper on each segment.

It may be appreciated from the foregoing that all of the objects which had been proposed have been achieved, and in particular that the screw securing device so constructed is easily obtained with simple machining operations.

Specially convenient is to form the shield from a sheet metal strip, while the use of a single assembling spring imparts the device expansion with particularly soft features.

Of course, based upon this same inventive concept, various and different may be the embodiments of the product, just as the materials and dimensions may be any ones contingent on requirements.

## CLAIMS

1. An expandable screw securing device characterized in that it comprises a shield formation (1) including at least two segments (2-4) formed by shearing and pressing from sheet metal, said shield formation defining a tubular body to the rear end whereof an expander cone (9) is hooked which cooperates with a screw (18) extending through said tubular body, said shield formation (1) also having a depressed annular seat (7) in the proximity of the front portion of the shield formation, said seat (7) accommodating a spring (17) and being adapted to hold the segments (2-4) together in the shield formation and to react elastically to the expansion thereof as caused by the insertion of the expander cone.

2. A screw securing device as in Claim 1, characterized in that the segments (2-4) are three and of like shape.

3. A screw securing device as in Claim 1, characterized in that each segment (2-4) has at the rear end beveled corners (16) and, at the middle of its rear edge portion, an inner hook (8) formed by punching of the sheet metal.

4. A screw securing device as in Claim 3, characterized in that said inner hook (8) extends into a diverging inclined flat face (15).

5. A screw securing device as in Claim 1 and 3, characterized in that said expander cone (9) comprises a frusto-conical surface (10) having an axial threaded bore (11), which is extended at the small diameter end into an annular channel (12) forming an abutment (13) where the inner hooks (8) of the segments (2-4) hook on to prevent separation of the cone (9) from the shield formation (1).

6. A screw securing device as in Claim 1,4 and 5, characterized in that said expander cone (9) has, on the frusto-conical surface (10), flattened areas (14) whose number corresponds to the number of the shielding segments (2-4), over said areas there slipping said inclined flat faces (15) of said inner hook (8) during the cone insertion.

7. A screw securing device as in Claim 1, characterized in that each segment (2-4) has one said depressed seat (7) for said cylindrical spring (17) having preferably several turns, said depressed seat having at one of the edges a recess (19) preferably obtained by shearing off a segment portion, said recess forming an edge (20) folded out to form a rotation-preventing wing.

8. A screw securing device as in Claim 1, characterized in that said spring (17) is constructed from a metal strip into one or more turns.

9. A screw securing device as in Claim 1, characterized in that said spring (17) is constructed from wire into one or more turns.

10. A screw securing device as in Claim 1, characterized in that each segment (2-4) has a cross-section practically as an arc of circle, the curvature being enhanced close to the edges with a pattern which is subsequently practically flat allowing for true mating, in the thickness, of two side-by-side edges belonging to two consecutive segments.

11. A screw securing device as in Claim 1 , characterized in that it further comprises, a bushing having a reduced diameter portion (25), inserted in the front end of said shield formation (1) and an edge flange (26) abutting against said shield formation front end.

0190596

Fig. 1

Fig. 2

Fig. 3

0190596

Fig.4

Fig.5

Fig.6

Fig.7

## European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | FR-A-1 327 039  (BOLIVIA) <br> * Page 1, right-hand column, lines 8-20; claim; figures 1,3 * | 1 | F 16 B  13/06 |
| A |  | 2,5,7-9,11 | |
| Y | FR-A-2 291 400  (WERNERSON) <br> * Page 2, lines 13-16; claim 1; figures * | 1 | |
| A | FR-A-1 373 649  (THOR WAERNER & CO.) <br> * Page 1, left-hand column, lines 1-34; page 1, right-hand column, lines 3-31; page 2, left-hand column, line 51 - page 2, right-hand column, line 45; claims; figures 1,3 * | 1-3,6, 7 | |
| A | FR-A- 476 982  (ADLER) <br> * Page 1, line 11 - page 2, line 2; figures 2,5 * | 1,7,9 | TECHNICAL FIELDS SEARCHED (Int. Cl.4) <br><br> F 16 B |
| A | GB-A-2 106 209  (MACHTLE) <br> * Abstract; figures 1,2; claims 1,18 * | 1,8,9 | |
| A | BE-A- 521 769  (RAWLPLUG) <br> * Claims 1-3; figures 1,12 * | 1,3-5 | |
|  | ---         -/- | | |

The present search report has been drawn up for all claims

| Place of search | Date of completion of the search | Examiner |
|---|---|---|
| THE HAGUE | 24-04-1986 | SCHAEFFLER C.A.A. |

## European Patent Office

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | CH-A- 467 422 (V. THIEL) | | |
| A | US-A-1 557 119 (TOMKINSON) | | |

TECHNICAL FIELDS SEARCHED (Int. Cl.4)

The present search report has been drawn up for all claims

| Place of search | Date of completion of the search | Examiner |
|---|---|---|
| THE HAGUE | 24-04-1986 | SCHAEFFLER C.A.A. |